# EUROPEAN PATENT SPECIFICATION

(11) **EP 4 057 571 B1**
(45) Date of publication and mention of the grant of the patent: **30.04.2025**
(21) Application number: 22153725.1
(22) Date of filing: 27.01.2022
(51) Int. Cl.: H04L 9/40, H04L 67/12, H04L 12/40

(54) **A SYSTEM AND METHOD FOR DETECTION AND DEFLECTION OF ATTACKS ON IN-VEHICLE CONTROLLERS AND NETWORKS**
SYSTEM UND VERFAHREN ZUR DETEKTION UND ABLENKUNG VON ANGRIFFEN AUF FAHRZEUGSTEUERUNGEN UND -NETZEN
SYSTÈME ET PROCÉDÉ DE DÉTECTION ET DE DÉVIATION D'ATTAQUES SUR DES ORGANES DE COMMANDE ET DES RÉSEAUX EMBARQUÉS

(30) Priority: 28.01.2021 US 202117160946
(43) Date of publication of application: 14.09.2022
(73) Proprietor: Robert Bosch GmbH, 70442 Stuttgart (DE)
(72) Inventor: Gehrer, Stefan, Pittsburgh, PA, 15222 (US)

(56) References cited:
- WO-A1-2020/120160
- VERENDEL V ET AL: "An Approach to using Honeypots in In-Vehicle Networks", VEHICULAR TECHNOLOGY CONFERENCE, 2008. VTC 2008-FALL. IEEE 68TH, IEEE, PISCATAWAY, NJ, USA, 21 September 2008 (2008-09-21), pages 1 - 5, XP031352443, ISBN: 978-1-4244-1721-6

## Description

### TECHNICAL FIELD

The present disclosure relates to security systems and mechanisms that may be utilized on communication networks in vehicles, as well as other systems such as aerospace, aviation, nautical, etc.

### BACKGROUND

An attacker targeting a modern connected vehicle may target an infotainment system or such similar systems that are connected to remote servers and the outside world via interfaces like Bluetooth, Wi-Fi, or other mobile data connections. Honeypots may be utilized for computer security. Automotive honeypots may focus on replicating an interface to attract attackers. If, however, an attack manages to hack a vehicle, they can further progress attacking more sensitive and safety critical parts of the car. While some existing intrusion detection systems may exist, they typically gather very limited information about the attacker's methods and capabilities.

WO 2020/120160 A1 discloses a method and a system for detecting intrusion in a distributed field bus of a vehicle network.

Document "An Approach to using Honeypots in In-vehicle Networks" by Verendel et al., VEHICULAR TECHNOLOGY CONFERENCE, 2008. VTC 2008-FALL. IEEE 68TH, IEEE, PISCATAWAY, NJ, USA, 21 September 2008 (2008-09-21), pages 1-5, XP031352443, ISBN: 978-1-4244-1721-6, discloses the use of honeypots as a means of collecting attacker information about attackers' preferences, techniques, and weaknesses in existing systems.

### SUMMARY

This application provides a vehicle system, as defined in the appended set of claims.

### BRIEF DESCRIPTION OF THE DRAWINGS

FIG. 1 shows a schematic basic depiction of a mechatronic system 2.
FIG. 2 shows a schematic basic depiction of a mechatronic system 2 having industrial automation components that use a field bus to communicate among one another and with other network users.
FIG. 3 is an example of an in-vehicle network that includes such a honeypot system.
FIG. 4 is an example flow chart of a process and method utilizing a honeypot to counteract an attack.

### DETAILED DESCRIPTION

Embodiments of the present disclosure are described herein. It is to be understood, however, that the disclosed embodiments are merely examples and other embodiments can take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the embodiments. As those of ordinary skill in the art will understand, various features illustrated and described with reference to any one of the figures can be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

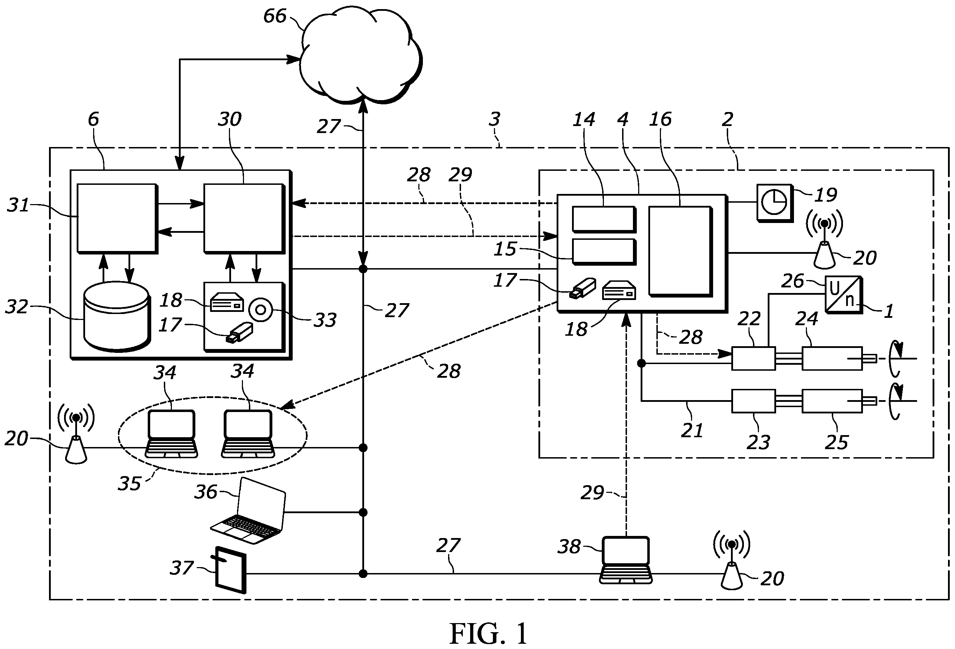

FIG. 1 shows a schematic basic depiction of a mechatronic system 2. In a mechatronic system 2 of this kind-in particular in an industrial automation system-machine control data 1 are obtained, including, in exemplary fashion in FIG. 1, a speed 1 (interchangeable with machine control data or machine control datum below). The machine control data 1 are communicated in the mechatronic system 2 in a network 3 having multiple network users 4, 6. To this end, the control data 1 are sent in the network 3 by an appropriately configured publisher by means of a data interchange standard that supports a publish/subscribe communication model. The data sent are received by a network user 6, 4 via the network 3 by means of the data interchange standard. In this case, the publisher performs the transmission in the form of network messages. The network messages sent are each intended for subscribers selectable as required that are decoupled from the publisher. A subscriber selectively obtains a network message with its control data 1 to be procured, in each case preferably under event control, or selects said network message; additionally or alternatively, the relevant subscriber can also selectively take the control data 1 to be procured from a received/analyzed network message. The network messages may be transmitted via a controller area network (CAN) protocol or any other communication method.

In the case of the industrial automation system 2 shown, a machine controller 4 of the mechatronic system 2 is incorporated into the network 3 as a network user, specifically firstly via a field bus 21 that connects the machine controller 4 to industrial automation components; secondly via an asynchronous network segment 27 that connects the machine controller 4 to other IT components, such as for example PCs. The machine controller 4 can be configured indiscriminately as a subscriber and/or as a publisher. If it is configured as a publisher, then it provides the control data 1 with a message identifier 7, codes or decodes the control data by means of the data interchange standard to produce a network message and sends the network message via the network 3. If the machine controller 4 is configured as a subscriber, it receives a network message intended for this subscriber (this then being the machine controller 4) by means of the message identifier 7 via the network 3 and decodes the network message by means of the data interchange standard to produce usable control data 1.

The mechatronic system 2 is designed to be communicative substantially with the industrial automation components by means of the field bus 21. The machine controller 4 has an integrated PLC 14 and a likewise integrated CNC 15. The visualization of machine control data 1 takes place via the display 16, which is likewise integrated in the machine controller 4. In addition, the machine controller 4 has a port for a USB stick 17 for interchanging control data within particular parties that are not incorporated in the network 3. In addition, there is a hard disk/SSD 18 that acts as an internal data memory of the machine controller and on which control data 1 are also stored, buffered and interchanged between the individual modules. The field bus 21 connects the machine controller 4 to two drive controllers 22, 23. The electric motor 25 is activated by the drive controller 23. The drive controller 22 actuates a servomotor 24. A tachometer 26 is used to return the instantaneous speed 1 (or other data used for actuating and/or monitoring the servo motor 24) to the drive controller 22. The speed 1 is likewise transmitted via the field bus 21 to the machine controller 4, where it is processed and used for communication in accordance with the disclosure. In order to ensure the consistency (in particular consistency over time) of the control data 1, there is inter alia also a clock provided for a system time 19 of the machine controller 4. The control data 1 can be provided with a system time-in particular a system time synchronized throughout the system-for example in the form of a timestamp by means of the clock 19.

The network 3 may also use the asynchronous network segment 27 to set up a communication connection between the mechatronic system 2 or components of the mechatronic system 2 and a network infrastructure that is based on an asynchronous (also non-realtime-compatible) network protocol. In an alternative embodiment, a synchronous network segment may also be utilized. The asynchronous network segment 27 has been used to incorporate an industrial PC 6. The industrial PC 6 likewise has an internal hard disk/SSD 18 and a port for a USB stick 17 (see above); in addition, a CD/DVD drive 33 is shown in exemplary fashion, this likewise being able to be used to load or forward communicated control data 1 in accordance with the disclosure. Various programs run on the industrial PC 6, of which an OPC-UA-compliant application entity 30 and a PC application 31 for control data 1 (e.g. a control or simulation tool) are shown in exemplary fashion. In the exemplary embodiment shown, the data interchange standard is OPC-UA. The OPC-UA-compliant application entity 30 of the industrial PC 6 is used to make available the OPC-UA-standard-compliant functionalities, in particular the communication via OPC-UA, on a commercially available industrial PC 6. The control data 1 received or sent or decoded or encoded by means of the OPC-UA-compliant application 30 are then bidirectionally interchanged with practically any PC application 31, selectable as required, for control data 1, so that the communication of the control data in accordance with the disclosure is realized. Additionally, the control data 1 become interchangeable with further network users 34, 35, 36, 37, 38 via an OPC-UA-compliant interface. To this end, each network user 4, 6, 34, 35, 36, 37, 38 also has an OPC-UA-compliant interface and/or application.

The asynchronous network segment 27 has additionally also been used to incorporate into the infrastructure:
Office PCs 34 that act in cooperation as an EDGE computing system 35, in which for example analysis tasks or computing tasks relating to the mechatronic system 2 are relocated. One part of the asynchronous network segment 27 is also a wireless transmitter 20, which is likewise used to transmit control data 1, inter alia.

A notebook 36, a tablet 37 and a standalone PC 38, which likewise communicates via a wireless transmitter 20.

A network connection to a cloud 66 accessible via the internet (for example for storing control data 1 with global availability, for example for preventive maintenance or analysis of mechatronic systems 2).

In the exemplary embodiment shown in FIG. 1, the machine controller 4 is configured firstly as a publisher and simultaneously as a subscriber. To this end, the machine controller 4 is incorporated in the mechatronic system 2 as a network user and can communicate control data 1 that are on the machine controller 4 in the whole network 3. In the case of the configuration as a publisher shown, provision is made for three publisher paths 28 from the point of view of the machine controller 4, one of which leads from the machine controller 4 to the industrial PC 6, one of which leads to the EDGE computing system 35, or as an entry to one of the office PCs 34, and one of which leads to the drive controller 22. To this end, the drive controller 22 has a drive-integrated machine controller (not shown here) or a drive-integrated PLC. The publisher paths 28 are physical and/or virtual paths that use the communication infrastructure of the network 3 and are physically realized by means of Ethernet and/or by means of wireless transmitter 20 and/or by means of the field bus 21, for example (this also applies mutatis mutandis to the subscriber paths 29, in this regard see later on).

Additionally when the machine controller 4 is configured as a publisher, it provides the control data with a message identifier 7, encodes said control data as a network message by utilizing a communication protocol and sends the network message via the network 3. In the exemplary embodiment shown, network users 6, 35 configured as subscribers in the asynchronous network segment 27 are present that receive the control data 1 published by the machine controller 4 in accordance with the disclosure. As a result, the control data 1 coming from the mechatronic system 2 are made available on the office PC 6 and also in the EDGE computing system 35. Specifically, the industrial PC 6 has an OPC-UA-compliant application entity 30, which is an application running on the industrial PC and communicates bidirectionally with a target PC application 31 for control data 1 and transmits the control data 1 interchanged in OPC-UA-compliant fashion. Generally, an OPC-UA-compliant application entity 30 of this kind or an OPC-UA-compliant application may be present on each of the network users 4, 6, 34, 35, 36, 37, 38. At the same time, a drive controller 22 configured as a subscriber is present that uses the publisher path 28 (as seen from the point of view of the machine controller 4) to receive the control data 1 from the machine controller 4; this can take place physically via the field bus 21, so that the communication of the control data 1 can also take place in real time.

Simultaneously, the machine controller 4 is configured as a subscriber (specifically, as above in the case of the configuration as a publisher too, in each case the control-integrated PLC 14). In this case, it uses the subscriber path 29 (from the machine controller point of view) to receive control data from the industrial PC 6.

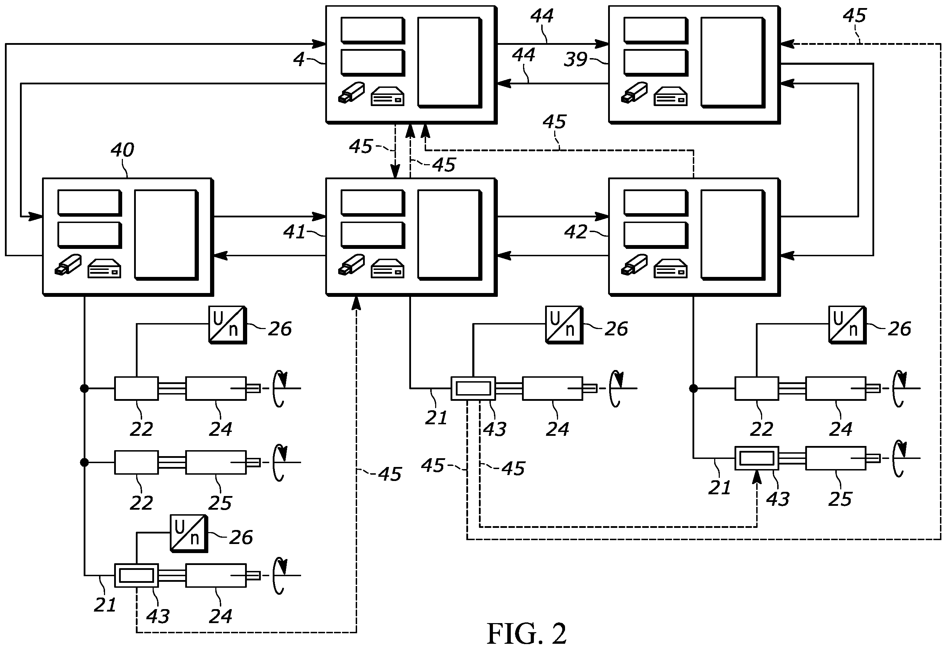

FIG. 2 shows a schematic basic depiction of a mechatronic system 2 having industrial automation components that use a field bus 44 to communicate among one another and with other network users or automation components. The field bus 44 may be any type of communication bus, such as or similar to a CAN bus. A field bus ring topology 44 may connect multiple machine controllers 4, 39, 40, 41, 42 (collectively referred to as 4+ below for the sake of simplicity) so as to communicate among one another in real time; this can be for example a Sercos field bus, an EtherCAT field bus, a Profinet field bus or a TSN based field bus or a realtime-compatible TSN network. In the exemplary embodiment shown, the field bus ring topology 44 is an oppositely directed double ring in order to provide, for example, a redundancy suitable for safety applications. As an alternative, a star topology (or any other topology) can be realized for TSN by using a TSN-compatible switch. The machine controllers 4, 39 may have industrial automation components connected to them. In one example, the machine controller 4 can act as a master. The machine controller 40 has a drive controller 43, having an integrated machine controller (e.g. PLC), connected to it, via a realtime communication medium, such as a field bus 21. Otherwise, another two drive controllers 22, each influencing a servomotor 24 or an electric motor 25, are connected. The machine controller 41 merely has a drive controller 43, having an integrated machine controller, connected to it via the field bus 21, said drive controller influencing a servomotor 24 having a tachometer 26; the tachometer 26 is used to return the speed 1 to the drive controller 43 in each case. Finally, the machine controller 42 has a drive controller 22, having connected servomotor 24/tachometer 26 combination, and a drive controller 43, having an integrated machine controller and an electric motor 25 influenced thereby, connected to it.

Additionally, publish/subscribe communication paths 45, which can be realized virtually or physically, may be shown in accordance with the disclosure. By way of example, they can be physically implemented by means of the field bus ring topology 44, or by utilizing further communication connections, which are not shown here. The machine controller 4 is configured as a publisher and sends control data procured from the machine controller 41, which in this regard is configured as a subscriber, via the communication path 45. Simultaneously, the machine controller 4 is configured as a subscriber for control data 1 procured from the machine controller 41, which in this regard is configured as a publisher. At the same time, the machine controller 4-configured as a subscriber-procures published control data from the machine controller 42 as a publisher. Control data can also be communicated by drives 22, 43 in accordance with the disclosure. To this end, the machine controller 39 is configured as a subscriber for control data 1 published by the drive controller 43, with an integrated machine controller, that is connected to the machine controller 41 via the field bus 21 as a publisher. At the same time, the drive controller 43 connected to the machine controller 42 also procures control data 1 from this drive controller 43 connected to the machine controller 41. Finally, the drive controller 43 connected to the machine controller 40 is configured as a publisher and publishes control data that (inter alia) are received by the machine controller 41, which in this respect is configured as a subscriber, via the communication path 45. Both the direct communication via the field bus ring topology 44 and the communication via the publish/subscribe communication paths 45 shown may take place in real time.

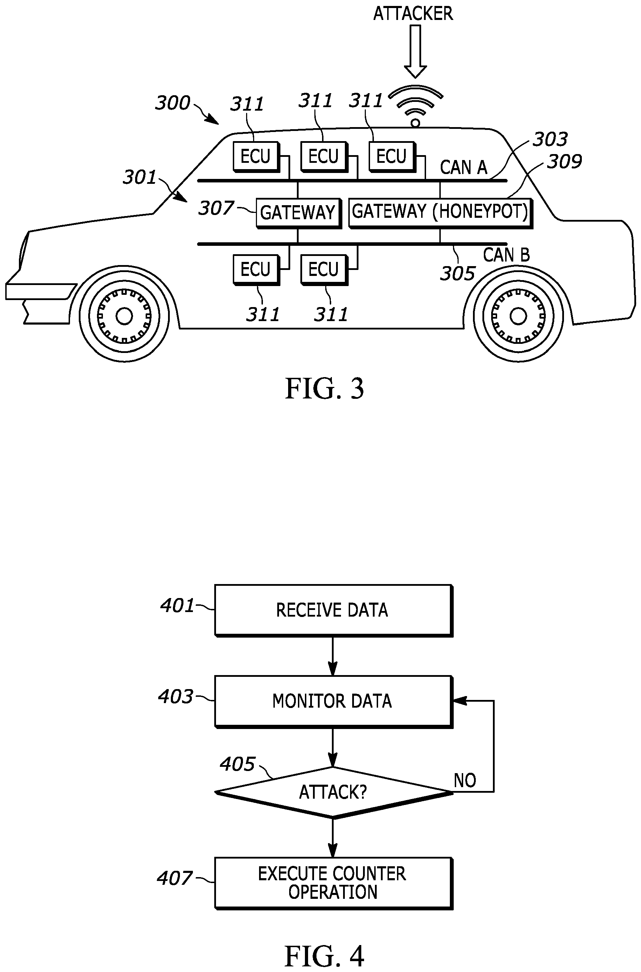

FIG. 3 is an example of an in-vehicle network that includes such a honeypot system. A vehicle system 301 may include a first CAN bus network 303 and a second CAN bus network 305. One of the CAN bus networks may include lower criticality systems and ECU's connected on that network, such as a telematics system, navigation system, multimedia system, etc. The other CAN bus network may include higher criticality systems. Such higher criticality systems may be utilized to operate the vehicle, such as the braking system (e.g., any system related ECU), the electronic throttle control, engine control unit, etc. While there may be separate bus networks within the vehicle system 301, there may be a gateway 307 that operates to communicate between the different networks in the vehicle.

In an embodiment of the system described, there may be a honeypot 309 utilized as a security mechanism. The honeypot 309 may act as a security mechanism by being a diversion to thwart attackers. The honey pot 309 may thwart attackers by emulating vehicle data. However, the honeypot 309 may not actually communication with operational ECUs that control vehicle functionality. In one example, automotive honeypots 309 may attempt to emulate the entire car, in particular the device that is connected to a remote network. The honeypot 309 may thus emulate communication with various ECUs, however, the honeypot 309 may not interfere with benign communication (e.g., not an attack or vulnerability) between the various ECUs on the bus that are communicating with one another. An example is the internet connectivity of an infotainment system, or a vehicle-to-vehicle (V2V) or vehicle-to-everything (V2X) controller in a vehicle with high autonomy or fully autonomous driving.

In one embodiment, the vehicle may utilize a fake gateway controller to act as a honeypot. A typical gateway controller may be an interesting target for an attacker because it may connect multiple busses of the car with each other, similar to a router. However, the busses may have different levels of safety criticality. One security practice may be to not connect any safety critical ECU to networks that have controllers in connection with outside networks. Thus, the infotainment system on CAN A is not being directly connected to a safety critical ECU like the drivetrain or brakes on CAN B.

In one embodiment, any ECU 311 can be used as a honeypot 309, thus the honeypot 309 may be configured to emulate an ECU. For example, the honeypot 309 may be configured to run fake commands, however, the honeypot 309 is not in communication with active vehicle components (e.g., like the Engine ECU), but may be running commands to emulate such data communication that would normally happen between the component the honeypot is mimicking and various vehicle components. Thus, the honeypot is not limited to simply emulate just a gateway between various vehicle buses, it may implement any vehicle component.

In one embodiment, the ECU 311 may be powertrain ECU on a safety critical bus, or a combination of multiple honeypot ECUs. In another embodiment, the honeypot could be deployed on every car in the fleet, or just randomly selected cars. The honeypot 309 could also include vulnerable code or software that is loaded onto memory of the honeypot 309, or a vulnerable ECU in communication with the honeypot 309, or any other ECU. Thus, such vulnerabilities may bait an attacker. Usually an attacker requires multiple vulnerabilities to get a level of control that they need to deploy a full attack, but such vulnerable code could eliminate that.

The honeypot may have some potential attack surfaces an attacker could use. One may be that it is at an end of arbitrary CAN messages to determine which module responds to which ID and message. This may require brute force and reverse engineering, which may be detected by that honeypot, and even further encouraged by fake-responding to CAN messages. In another example, an attacker may take over an infotainment system. From that point, the attacker may determine a way to flash a new firmware on the CAN controller part (e.g., software or hardware that operates with the CAN controller) of the infotainment system. From there, the attacker may send arbitrary CAN messages to the CAN bus to see which controller reacts to which CAN ID messages. A honeypot 309 may be utilized to identify such activity, such as the arbitrary CAN messages, which CAN bus the messages are sent to, and which controller would react to which CAN ID messages. The honeypot 309 may also be utilized as a sink for multiple CAN IDs and messages, and actively respond to them in order to attract an attacker to the honeypot 309.

The honeypot 309 may also be utilized to monitor secure flashing. For secure flashing (and other diagnostics) of controllers that are connected to a CAN bus within a vehicle, Unified Diagnostic Services (UDS). A security feature of UDS may be a seed / key algorithm, which may often require some kind of brute forcing / data collection to break. Such a seed may be simulated by the honeypot, to lure an attacker into attacking a certain device. Then, the vehicle system may collect information about the attacker and its capabilities. Such information may include where the attack was started, capabilities of the attacker, and other similar information.

In another example, if an attacker has physical access to a car, the open JTAG (or SPI, i2C) interfaces may be utilized to directly flash a microcontroller. The honeypot may utilize a fake JTAG interface and could be presented on an attacker (physically visible on the microcontroller) to trick an attacker into attacking the honeypot. Furthermore, the system could use the honeypot to instead of just faking a JTAG interface, fake a complete microcontroller with a JTAG (or other similar) interface.

In yet another embodiment, the system may have the honeypot record (e.g., store) what a real gateway did in the past and replay those actions and commands. Thus, the honeypot and system may have information to replicate past actions of a real gateway, including the types of data communication and to what ECUs or vehicle components that data goes to.

The system or the honeypot may utilize a recording of what a real gateway has done in terms of operations in the past. For example, the system may record gateway operations of an actual honeypot (not a gateway) and have the honeypot mimic operation. The replay may utilize actually known responses to seen states and transitions in an effort to mimic the emulation of the honeypot. The system and honeypot may also simulate a gateway by a rule-based system. For example, the system and honeypot may determine if a certain message (e.g., message x) comes from CAN bus A, then translates to a different message (e.g., message y) to CAN bus B, it may wait a threshold time (e.g., two seconds), then send a reply from CAN bus B to CAN bus A.

While the operation of FIG. 3 is shown with respect to a vehicle, any type of system may be utilized. For example, similar techniques may also be used in the areas of Internet-of-Things (IOT) or Industry 4.0, where an attack is taken as a risk, but honeypots are deployed deeper inside real systems.

FIG. 4 is an example flow chart of a process and method utilizing a honeypot to counteract an attack. At step 401, a processor or controller that is a part of the honeypot or in communication with the honeypot may receive data from one or more remote devices or ECUs in communication with a remote device. The data may be any type of data, such as a communication command, notification, or any other data. At step 403, the system may monitor such data from the remote device. The data may be analyzed in order to determine if the data needs to be communicated to another recipient (e.g., another ECU) or executed.

At decision 405, the system may determine if such data from the remote device is from a potential attacker. The system may analyze the data for threatening code or commands that may execute malware, viruses, security threats, etc. If the system determines that the data is not from an attacker, it may continue to simply monitor the data. The system may have code or programs utilized to monitor such data to determine if the activity is from an attacker.

At step 407, the system may then execute a counter operation based on the determination. The potential counter action may be complete silence, and thus the system may simply not operate any countermeasure and utilize the honeypot as a diversion. In another example, the honeypot may be utilized to log the intrusion. Thus, the honeypot may record data related to the intrusion, such as an IP address, MAC address, device name, commands, messages, identifiers, or other data related to the intrusion. Such information may be analyzed locally or be sent to a control center. The attack can be analyzed either locally or remotely (e.g., at the control center) to determine future security enhancements to other security mechanisms and ECUs, such as more robust code, to prevent such attacks from happening in the future. Actively react to the intrusion by, e.g., defaulting to a limp-home mode of the vehicle (only very slow driving) or disabling certain parts/controllers of the car. The countermeasures may be one of the following above or any of the countermeasures above in a combination.

The processes, methods, or algorithms disclosed herein can be deliverable to/implemented by a processing device, controller, or computer, which can include any existing programmable electronic control unit or dedicated electronic control unit. Similarly, the processes, methods, or algorithms can be stored as data and instructions executable by a controller or computer in many forms including, but not limited to, information permanently stored on non-writable storage media such as ROM devices and information alterably stored on writeable storage media such as floppy disks, magnetic tapes, CDs, RAM devices, and other magnetic and optical media. The processes, methods, or algorithms can also be implemented in a software executable object. Alternatively, the processes, methods, or algorithms can be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

## Claims

1. A vehicle system (301), comprising:
a first vehicle bus (303), wherein the first vehicle bus (303) includes one or more electronic control units, ECUs (311), configured to operate, wherein the one or more ECUs (311) are configured to communicate with a remote server;
a second vehicle bus (305), wherein the second vehicle bus (305) is configured to communicate to the one or more ECUs (311), wherein the second vehicle bus (305) includes one or more vehicle driving ECUs (311) configured to operate vehicle driving functionality;
a gateway controller (307) configured to control communication between the first vehicle bus (303) and the second vehicle bus (305); and
a honeypot (309) configured to emulate vehicle data, wherein the honeypot (309) is further configured to monitor activity from a remote attacker,
**characterized in that** the honeypot (309) is configured to emulate the gateway controller (307),
wherein the second vehicle bus (305) and the one or more vehicle driving ECUs (311) are not connected to the remote server.

2. The vehicle system of claim 1, wherein the honeypot is located on the first vehicle bus.

3. The vehicle system of claim 1, wherein the honeypot is located on the first vehicle bus, wherein the one or more ECUs includes an ECU associated with an infotainment system of the vehicle or another non-safety critical system of the vehicle.

4. The vehicle system of claim 1, wherein the honeypot is configured to emulate one or more vehicle driving ECUs.

5. The vehicle system of claim 1, wherein the honeypot is configured to log the activity from the remote attacker.

6. The vehicle system of claim 1, wherein the honeypot includes memory that stores one or more software or hardware vulnerabilities.

7. The vehicle system of claim 1, wherein the honeypot is further configured to emulate communication to additional ECUS that are not in the vehicle, wherein the additional ECUs include one or more software or hardware vulnerabilities.

## Patentansprüche

1. Fahrzeugsystem (301), umfassend:
einen ersten Fahrzeugbus (303), wobei der erste Fahrzeugbus (303) eine oder mehrere für einen Betrieb ausgelegte elektronische Steuereinheiten, ECUs (311) beinhaltet, wobei die eine oder die mehreren ECUs (311) zum Kommunizieren mit einem entfernten Server ausgelegt sind;
einen zweiten Fahrzeugbus (305), wobei der zweite Fahrzeugbus (305) zum Kommunizieren mit der einen oder den mehreren ECUs (311) ausgelegt ist, wobei der zweite Fahrzeugbus (305) eine oder mehrere Fahrzeugfahrt-ECUs (311) beinhaltet, die für einen Betrieb einer Fahrzeugfahrtfunktionalität ausgelegt sind;
eine Gateway-Steuerung (307) zum Steuern einer Kommunikation zwischen dem ersten Fahrzeugbus (303) und dem zweiten Fahrzeugbus (305) ausgelegt ist; und
einen Honeypot (309), der zum Emulieren von Fahrzeugdaten ausgelegt ist, wobei der Honeypot (309) ferner zum Überwachen einer Aktivität von einem entfernten Angreifer ausgelegt ist,
**dadurch gekennzeichnet, dass** der Honeypot (309) zum Emulieren der Gateway-Steuerung (307) ausgelegt ist,
wobei der zweite Fahrzeugbus (305) und die eine oder die mehreren Fahrzeugfahrt-ECUs (311) nicht mit dem entfernten Server verbunden sind.

2. Fahrzeugsystem nach Anspruch 1, wobei sich der Honeypot auf dem ersten Fahrzeugbus befindet.

3. Fahrzeugsystem nach Anspruch 1, wobei sich der Honeypot auf dem ersten Fahrzeugbus befindet, wobei die eine oder die mehreren ECUs eine ECU beinhalten, die mit einem Infotainmentsystem des Fahrzeugs oder einem anderen nicht sicherheitskritischen System des Fahrzeugs assoziiert ist.

4. Fahrzeugsystem nach Anspruch 1, wobei der Honeypot zum Emulieren einer oder mehrerer Fahrzeugfahrt-ECUs ausgelegt ist.

5. Fahrzeugsystem nach Anspruch 1, wobei der Honeypot zum Protokollieren der Aktivität von dem entfernten Angreifer ausgelegt ist.

6. Fahrzeugsystem nach Anspruch 1, wobei der Honeypot einen Speicher beinhaltet, der eine oder mehrere Software- oder Hardware-Sicherheitslücken speichert.

7. Fahrzeugsystem nach Anspruch 1, wobei der Honeypot ferner zum Emulieren einer Kommunikation mit zusätzlichen ECUs ausgelegt ist, die sich nicht in dem Fahrzeug befinden, wobei die zusätzlichen ECUs eine oder mehrere Software- oder Hardware-Sicherheitslücken beinhalten.

## Revendications

1. Système de véhicule (301), comprenant :
un premier bus de véhicule (303), dans lequel le premier bus de véhicule (303) inclut une ou plusieurs unités de commande électroniques, « Electronic Control Units » ECUs, (311), configurées pour fonctionnement, dans lequel l'une ou les plusieurs ECUs (311) sont configurées pour communiquer avec un serveur à distance ;
un second bus de véhicule (305), dans lequel le second bus de véhicule (305) est configuré pour communiquer avec l'une ou les plusieurs ECUs (311), dans lequel le second bus de véhicule (305) inclut une ou plusieurs ECUs de conduite de véhicule (311) configurées pour le fonctionnement d'une fonctionnalité de conduite de véhicule ;
un dispositif de commande de passerelle (307) configuré pour commander une communication entre le premier bus de véhicule (303) et le second bus de véhicule (305) ;
et
un pot de miel (309) configuré pour émuler des données de véhicule, dans lequel le pot de miel (309) est en outre configuré pour surveiller une activité d'un attaqueur à distance,
**caractérisé en ce que** le pot de miel (309) est configuré pour émuler le dispositif de commande de passerelle (307),
dans lequel le second bus de véhicule (305) et l'une ou les plusieurs ECUs de conduite de véhicule (311) ne sont pas connectés au serveur à distance.

2. Système de véhicule de la revendication 1, dans lequel le pot de miel est situé sur le premier bus de véhicule.

3. Système de véhicule de la revendication 1, dans lequel le pot de miel est situé sur le premier bus de véhicule, dans lequel l'une ou les plusieurs ECUs incluent une ECU associée à un système d'info-divertissement du véhicule ou un autre système du véhicule non essentiel à la sécurité.

4. Système de véhicule de la revendication 1, dans lequel le pot de miel est configuré pour émuler une ou plusieurs ECUs de conduite de véhicule.

5. Système de véhicule de la revendication 1, dans lequel le pot de miel est configuré pour journaliser l'activité de l'attaqueur à distance.

6. Système de véhicule de la revendication 1, dans lequel le pot de miel inclut une mémoire qui stocke une ou plusieurs vulnérabilités logicielles ou matérielles.

7. Système de véhicule de la revendication 1, dans lequel le pot de miel est en outre configuré pour émuler une communication à des ECUs supplémentaires qui ne sont pas dans le véhicule, dans lequel les ECUs supplémentaires incluent une ou plusieurs vulnérabilités logicielles ou matérielles.
